# EUROPEAN PATENT APPLICATION

(11) **EP 3 000 321 A1**
(43) Date of publication of application: **30.03.2016**
(21) Application number: 14186420.7
(22) Date of filing: 25.09.2014
(51) Int. Cl.: A01P 1/00, A01P 21/00, A01N 25/00, A01N 43/08, A01N 59/16, A01N 59/20

(54) **Use of a composition and method for seed treatment**

(71) Applicant: multiBIND biotec GmbH, 51105 Köln (DE)
(72) Inventor: Lisowsky, Thomas, 40789 Monheim (DE); Esser, Karlheinz, 41199 Mönchengladbach (DE)
(74) Representative: Remus, Alvaro Johannes

(57) **Abstract**

The present invention relates to a composition and method for the treatment of seeds, which allow efficient decontamination of seeds from unwanted external nucleic acids, viruses, bacteria and microorganisms. A comparison of the medium length of the shoots from seeds after 6 days of germination shows the positive effect of the method according to the invention on seed germination and development. That is, treatment of seeds with the composition according to the invention surprisingly also results in enhancement of seedling development. The composition may be applied as a water-based solution or solid carrier or in combination with other seed treatment additives like nutrients, fungicides or pesticides. The composition according to the invention also allows coating of seeds.

## Description

### Background

The invention relates to a method for enhancing seed germination and seed development, wherein at least one seed is treated with a specific composition. The invention further concerns the use of the specific composition for removal or elimination of nucleic acids, viruses, bacteria, fungi and other microorganisms from at least one seed.

### Prior art

Seed treatment compositions for agricultural crops are well known. But so far, there is no commercial seed treatment composition or method that also addresses the increasing problem of nucleic acid contaminations by genetically modified nucleic acids. In addition, many such conventional treatments are based upon compositions that have certain undesirable attributes, and in modern day farming might be termed as environmentally unsatisfactory. For example, treatment compositions that contribute to runoff causing environmental problems such as pesticide release, eutrophication of groundwater, nitrate pollution, phosphate pollution and the like are unsatisfactory. With the ever increasing public concern for the environmental impact of materials placed in the soil, or at the point of treatment, there is an ever-increasing need for development of effective seed treatments which are environmentally satisfactory, which cause no harm to the plant, and which are effective for a broad spectrum of seeds from agricultural plants.

The dynamic developments in plant breeding using molecular biology for modifying the genetic information stress the importance of new methods and techniques for detection and amplification of DNA molecules. Latest examples concern molecular diagnostics of genetically modified plants, analysis of DNA in plant breeding and quality control in crops and food production.

With the invention of the polymerase chain reaction (PCR) it is even possible to detect single molecules. The extreme sensitivity of these sensitive detection methods allow the identification of contaminations on surfaces of seeds, plants, crops and all kind of plant products by unwanted nucleic acid molecules, genetically modified artificial nucleic acids, viruses, bacteria or microorganisms. This is especially important because of the necessary strict separation of products from organic farming, conventional farming and genetically modified plants and their products. In addition viral, bacterial and microbial contaminations cause severe problems and commercial losses for seed production, germination, harvest and post-harvest storage.

Therefore, already for a longer time many different compositions, agents and solutions exist for seed treatment. The major disadvantages of these compositions, solutions and methods are the only selective actions against viruses, bacteria, fungi and microorganisms. Especially compositions for seed treatment with high efficacy against external DNA molecules and also viruses are so far not available. The strong commercial interest in such compositions is stressed by the already available and marketed large scale of conventional products for seed treatment.

The disadvantages of the current conventional seed treatment solutions and methods are their only limited action especially against different biological molecules like nucleic acids and viruses.

WO 2006/116983 A2 reveals a method and composition for general decontamination solutions and use thereof for denaturing, modifying, degrading, solubilizing and removing proteins, nucleic acid molecules and microorganisms. But these are only selected and isolated results that can only be applied to specific single cases.

The latest findings in modern molecular biology and gene technology demonstrate that already the genetic information alone or even single genes and fragments thereof as well as specific proteins are sufficient to cause diseases or unwanted and deleterious changes in the genetic information.

Therefore, for applied purposes there is the necessity for new improved protocols, agents, methods and compositions for efficient and at the same time gentle and not harmful treatment and decontamination of all kind of seeds from nucleic acids, viruses, bacteria, fungi and other and microorganisms.

### Summary of the invention

The goal of the here described invention is therefore to overcome the current limitations and disadvantages of the prior art and to develop new methods and compositions for seed treatment.

This task is accomplished by applying natural anti-oxidants in combination with metal ions and surface-active agents for seed treatment.

In particular, a method for enhancing seed germination and seed development is provided, wherein at least one seed is treated with a composition comprising a synergistic mixture of
a) at least one vitamin in concentrations from 1 mM to 50 mM,
b) at least one metal ion in concentrations of 0.1 mM to 10 mM, and
c) at least on surface-active substance in concentrations of 0.005 % to 1 % (wv).

Unexpectedly and surprisingly, it was found that a specific concentration of different vitamins in combination with metal ions and detergents result in highly effective nucleic acid decontamination of seeds, removal and elimination of viruses, bacteria, fungi and other microorganisms and at the same time does not have any negative effect on seed germination or development. On the contrary, it was found that the composition according to the invention has a positive effect for enhancing seed germination and development.

In an advantageous embodiment of the method according to the invention the vitamin is selected from the group of water-soluble vitamins having the characteristics of an antioxidant, for example, ascorbic acid.

In another advantageous embodiment of the method according to the invention the metal ion is taken from the 4th group and sub-groups I, II, or VIII of the periodic table of the elements, for example, iron, copper and/or zinc.

In yet another advantageous embodiment of the method according to the invention the metal ion is a salt from the respective acid or base, for example, FeSO₄, CuCl₂ and/or ZnCl₂.

In yet another advantageous embodiment of the method according to the invention the surface-active substance is selected from the group consisting of anionic, non-ionic, amphoteric or cationic tensides, and suitable mixtures thereof, for example, Sodium-Dodecyl-Sulfate (SDS) or Sodium_Olefine-Sulfonate (SOS).

In yet another advantageous embodiment of the method according to the invention the vitamin according to a) is used in concentrations from 2 mM to 40 mM, in particular 5 mM to 40 mM, 5 mM to 30 mM, 5mM to 20 mM, 10 mM to 20 mM, 10 mM to 30 mM, or 10 mM to 40 mM.

In yet another advantageous embodiment of the method according to the invention the metal ion according to b) is used in concentrations of 0.5 mM to 5 mM, in particular 0.5 mM to 4 mM, 0.5 mM to 3 mM, 0.5 mM to 2 mM, 1mM to 3 mM, 1 mM to 4 mM, or 1 mM to 5 mM.

In yet another advantageous embodiment of the method according to the invention the surface-active substance according to c) is used in concentrations of 0.01 % to 0.5 % (weight) in relation to the total volume of the solution, in particular 0.01 % to 0.4 %, 0.01 % to 0.3 %, 0.01 % to 0.2 %, 0.01 % to 0.1 %, 0.05 % to 0.4 %, 0.05 % to 0.3 %, 0.05 % to 0.2 %, 0.05 % to 0.1 %, 0.1 % to 0.2 %, 0.1 % to 0.3 %, 0.1 % to 0.4 %, or 0.1 % to 0.5 %.

In yet another advantageous embodiment of the method according to the invention the treatment is accomplished by liquid application (e.g. spraying), bath treatment, coating or dusting of the at least one seed.

In yet another advantageous embodiment of the method according to the invention organic acids are used as a buffer for adjusting an acidic pH before the treatment is accomplished, for example, tartaric acid and/or citrate.

In yet another advantageous embodiment of the method according to the invention the pH of the composition is adjusted before the treatment to a value within the range of pH 2 and pH 5.

In yet another advantageous embodiment of the method according to the invention, for production and shipment, said composition is provided as a 100xfold to 10,000xfold concentrate.

The goal of the invention is also achieved by the provision of a seed comprising at its surface a coating comprising a synergistic mixture of
a) at least one vitamin,
b) at least one metal ion, and
c) at least on surface-active substance.

Seed coated with at least one vitamin in combination with metal ions and detergents is optimized in respect of seed germination and development, i.e. exhibits a germination rate of more than 95 % up to almost 100 %. Coating of the seed with the composition according to the invention as described above can be accomplished, for example, by liquid application (e.g. spraying) of the composition onto the surface of the seed, bath treatment, sprinkling and/or dusting of the seed.

The goal of the invention is further achieved by the use of a composition comprising a synergistic mixture of
a) at least one vitamin,
b) at least one metal ion, and
c) at least on surface-active substance for enhancing seed germination and seed development.

The goal of the invention is further achieved by the use of a composition comprising a synergistic mixture of
a) at least one vitamin,
b) at least one metal ion, and
c) at least on surface-active substance
   for removal or elimination of nucleic acids, viruses, bacteria, fungi and other microorganisms from at least one seed.

In the method according to the invention the composition can be used in combination with common additives or adjuvants.

The composition according to the invention effectively eliminates Bacteria, for example, Mycobacterium tuberculosis, P. aeruginosa, S. aureus (MRSA), E. coli, E. hirae, VRE, Clostridium difficile, Bacterial spores, E. faecalis, S. marscesens, Acunibacter baumannii, and/or Legionella pneumophila, Fungi, for example, Aspergiullus niger, Penicillium notatum, and/or Candida albicans, and Viruses, for example, BVDV, Adenovirus, Papilloma virus, Noro (Norwalk) virus, Influenza A (H1N1) virus, Vaccinia, MERS-CoV (Coronavirus).

The term "vitamin" as used herein includes but is not limited to the vitamin itself, its related salts, structural analogues and acidic derivatives.

The term "structural analogues" as used herein refers to compounds derived from another compound by replacing one atom or group of atoms with another atom or group of atoms.

The term "derivatives" as used herein refers to compounds that are derived from a similar compound by a chemical or physical process.

### Brief description of the figures and tables

**Table 1** summarizes tests for the anti-microbial action of the method according to the invention against external bacteria on the surface of seeds; Formulation F1: 10 mM ascorbic acid, 5 mM citrate, 1 mM FeSO₄ x 7 H₂O, 0.1 mM CuCl₂ x 2 H₂O, 0.1% SOS; and Formulation F2: 20 mM ascorbic acid, 5 mM tartaric acid, 1 mM CuCl₂ x 2 H₂O, 0.01% SDS.
**Table 2** shows a test for the inactivation and elimination of bacteriophages from the surface of seeds by the method according to the invention; Formulation F3: 10 mM ascorbic acid, 5 mM citrate, 1 mM CuCl₂ x 2 H₂O, 0.1% SDS; and Formulation F4: 10 mM ascorbic acid, 5 mM citrate, 2 mM ZnCl₂, 1 mM FeSO₄x 7 H₂O, 0.1 mM CuCl₂x 2H₂O, 0.1 % SOS.
**Figure 1** shows an electrophoretic analysis of plasmid DNA from seeds treated with different compositions in accordance with the method according to the invention.
**Figure 2** shows a bar diagram representing the elimination of bacteria and the positive effect of the method according to the invention on seed germination and development by comparison of the medium length of the shoots from seeds after 6 days of germination.

### Detailed description of exemplary and preferred embodiments of the invention

One purpose of this invention is the development of compositions for seed treatment that contain a synergistic mixture of
a) at least one vitamin and
b) at least one metal ion and
c) at least one surface-active compound.

The current invention relates to such an environmentally sustainable innovative seed treatment composition and method for the removal of unwanted nucleic acids, viruses, bacteria and microorganisms in combination with many other advantages. Especially the contamination by unwanted genetically modified nucleic acids is subject to increasing awareness. The aim of the present invention therefore is, as one of its primary objectives, the fulfillment of the above needs, in particular, nucleic acid decontamination, removal and inactivation of viruses and microorganisms, development of non-toxic and environmentally satisfactory seed treatment compositions for crops such as for example cereals, wheat, corn, beans, soybeans and all other commercial crops propagated from seeds. An additional primary objective of the present invention is the enhancement of seed development.

An even further objective of the present invention is to provide a composition which can be used as a liquid seed treatment composition or in a dry composition for seed dusting or for coating of seeds.

Another purpose of this invention is the use of the invention related composition for treatment of seeds by liquid, coating or dusting to remove efficiently external nucleic acid molecules, viruses, bacteria and other microorganisms from the seed surfaces.

Only compositions containing combinations of vitamins with metal ions and detergents in an appropriate mixture give a synergistic effect for rapid and massive nucleic acid decontamination, virus inactivation and at the same time removal or elimination of bacteria and other microorganisms. Especially important is the finding that the compositions used in this invention shows high efficacy in the pH range of 2 to 5.

The invention-related applied vitamins or their respective salts or acidic derivates are one or several compounds and/or the related salts selected from the group of the water-soluble vitamins with the properties of antioxidants, like preferably vitamin C, riboflavine and niacin. They are applied in ready-to-use solutions in concentrations of 1 mM to 50 mM in relation to the total volume of the solution.

The invention-related applied metal ions are di- and/or trivalent ions of metals found in the 4th group and/or sub-group I, II and VIII of the periodic table of the elements. They are used as salts in combination with their organic and/or inorganic acids and bases. Invention-related preferred are one or several compounds selected from sub-group VIII, especially iron, cobalt, nickel, copper or zinc. They are used in concentrations of 0.1 mM to 10 mM, in relation to the total volume of the solution.

The invention-related applied surface-active substances are anionic, non-ionic, amphoteric or cationic inert tensides or suitable mixtures thereof. Especially, alkylethersulfate, alkyl- and/or arylsulfonate, alkylsulfate, amphotensides, betaines, alkylamidoalkylamines, alkyl substituted amino acids, alkyl substituted imino acids, acylated amino acids, and amphotenside combinations can be used. In principle all inert tensides are suitable. Inert means, that these tensides do not disturb or reduce the efficacy of the composition and its effects and that they do not have negative effects on seeds. Invention-related preferred are anionic and non-ionic tensides.

They are used in concentrations of 0.005 %. to 1 % (weight), in relation to the total volume of the solution.

The invention-related composition can contain additional common inert adjuvants and additives like for example suitable buffer substances for defining a specific acidic pH value, like Tris (Tris(hydroxymethyl)-aminomethan), MES (2(Morpholino)ethansulfonic acid), HEPES (2-[4-(2-Hydroxyethyl)-1-piperazinyl]-ethansulfonic acid, MOPS (3-(N-Morpholino)propansulfonic acid), and organic acids like citrate, succinic acid, tartaric acid and the like.

In principle thereby all kind of seeds can be treated in a very gentle way for removal and elimination of nucleic acids contaminations, viruses, bacteria and other microorganisms.

In general seed treatment is achieved by spraying, bath solution or liquid application of the invention-related composition onto seeds.

The applied methods are however variable and can be adjusted to the different tasks.

Experimental details and protocols for the examples represented by figures and tables are given in the following part:

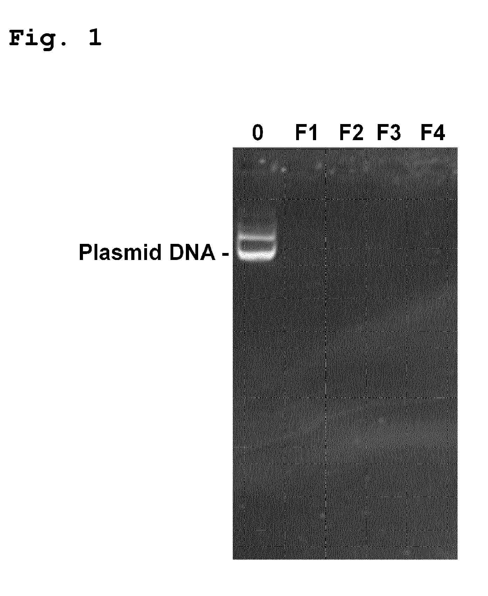

**Figure 1** does show the efficient degradation of external DNA molecules from seeds by the method according to the invention.

2 µg of Plasmid DNA from YEp351 were dissolved in a volume of 200 µl sterile water and mixed in a ratio of 1:1 (volume/weight) with about 200 mg of seeds from *Triticum aestivum.* 20 µl of a 10x concentrated solution of formulation F1 (10 mM ascorbic acid, 5 mM citrate, 1 mM FeSO₄ x 7 H₂O, 0.1 mM CuCl₂ x 2 H₂O, 0.1% SOS), F2 (20 mM ascorbic acid, 5 mM tartaric acid, 1 mM CuCl₂ x 2 H₂O, 0.01% SDS), F3 (10 mM ascorbic acid, 5 mM citrate, 1 mM CuCl₂ x 2 H₂O, 0.1% SDS) or F4 (10 mM ascorbic acid, 5 mM citrate, 2 mM ZnCl₂, 1 mM FeSO₄x 7 H₂O, 0.1 mM CuCl₂x 2H₂O, 0.1 % SOS) from the composition were added and the samples were incubated for 20 minutes at room temperature. Afterwards 50 µl samples were denatured at 95°C and the denatured samples were immediately cooled to 4°C and identical aliquots of 10 µl were loaded per gel lane. DNA molecules were stained with ethidium bromide after gel electrophoresis in a 1% agarose gel and photographed. The control with only sterile water shows intact CCC-form of Plasmid DNA whereas all the samples treated with F1, F2, F3 or F4 do not show any intact DNA molecules. This demonstrates the efficient degradation and removal of external DNA molecules from the seed samples by the method according to the invention.

**Table 1** summarizes tests for the anti-microbial action of the composition according to the invention against external bacteria on the surface of seeds.

Freshly grown cultures of the listed microorganisms *Escherichia coli* (DSM 498), *Xanthomonas campestris* (DSM 3586) and *Pseudomonas syringae* (DSM 10604)) were adjusted to a cell number of about 10⁶ in a 200 µl volume and mixed in a ratio of 1:1 (volume/weight) with about 200 mg of seeds from *Triticum aestivum.* The seeds were than mixed with 1 ml of formulation F1 (10 mM ascorbic acid, 5 mM citrate, 1 mM FeSO₄ x 7 H₂O, 0.1 mM CuCl₂ x 2 H₂O, 0.1% SOS) or F2 (20 mM ascorbic acid, 5 mM tartaric acid, 1 mM CuCl₂ x 2 H₂O, 0.01% SDS) from the new composition. After an incubation time of 20 minutes at room temperature 100 µl aliquots containing the microorganisms and suitable dilutions thereof were plated onto the respective growth media. After an incubation period of 3 days at 28°C or 37°C the number of grown colonies was determined and the number of living bacteria in the sample was calculated. In test samples with sterile water all microorganisms survived. Test samples treated with the composition according to the invention did not show any living bacterial colonies, indicating that under these conditions all microorganisms were effectively killed.

**Table 2** shows a test for the inactivation and elimination of bacteriophages from the surface of seeds by the method according to the invention.

Freshly prepared bacteriophage lambda-gt11 was adjusted to a titer of about 10⁶ pfu in a 200 µl volume and mixed in a ratio of 1:1 (volume/weight) with about 200 mg of seeds from *Triticum aestivum.* The seeds were than mixed with 1 ml of formulation F3 (10 mM ascorbic acid, 5 mM citrate, 1 mM CuCl₂ x 2 H₂O, 0.1% SDS) or F4 (10 mM ascorbic acid, 5 mM citrate, 2 mM ZnCl₂, 1 mM FeSO₄x 7 H₂O, 0.1 mM CuCl₂x 2H₂O, 0.1 % SOS) from the composition according to the invention. After an incubation time of 20 minutes at room temperature 100 µl aliquots containing the bacteriophages and suitable dilutions thereof were mixed with 100 µl of the tester strain *E. coli* W3110 (late log growth phase in 10 mM MgSO₄). The incubation of test bacteria *E. coli* W3110 was done for 20 min. at 37°C. Than 3 ml top agar (45°C) were mixed with the bacteria and poured onto growth plates. After incubation of plates at 39°C for 16 h the plaque forming units were determined. In test samples with sterile water large numbers of plaques were observed whereas test samples treated with the composition according to the invention did not show any plaques indicating elimination or inactivation of all bacteriophage units.

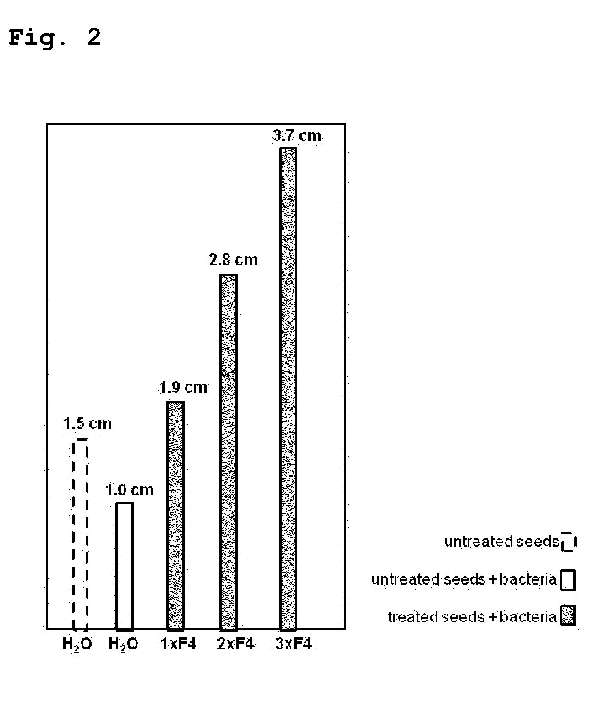

**Figure 2** shows the elimination of bacteria and the positive effect of the method according to the invention on seed germination and development by comparison of the medium length of the shoots from seeds after 6 days of germination.

Seeds from *Lepidum sativum* were incubated for 20 minutes at room temperature in formulation F4 (10 mM ascorbic acid, 5 mM citrate, 2 mM ZnCl₂, 1 mM FeSO₄x 7 H₂O, 0.1 mM CuCl₂x 2H₂O, 0.1 % SOS) from the composition. As a control seeds were incubated just in sterile H₂O. After the incubation the seeds were placed on filter paper wetted with H₂O or the formulation F4 and placed on a LB growth plate at 30°C. In addition to each plate a suspension of *Escherichia coli* (DSM 498) was added with 1 ml of 10⁶ living bacteria. One control was just with sterile H₂O and without bacteria and the other control was with sterile H₂O and with bacteria. After 6 days at 30°C the medium length of the shoots from 20 seedlings was determined. The analysis did show complete elimination of living bacteria by the formulation F4 and in addition upon increase of the concentration of F4 also an increase in the medium length of the shoots was observed. The medium length of the shoots from treated and untreated seeds after 6 days of germination are given in centimeters (cm).

The invention concerns a composition and method for the treatment of seeds for decontamination from unwanted external nucleic acids, viruses, bacteria and microorganisms. Treatment of seeds with the composition according to the invention surprisingly also results in enhancement of seedling development. The composition may be applied as a water-based solution or solid carrier or in combination with other seed treatment additives like nutrients, fungicides or pesticides. The composition also allows coating of seeds.

### List with explanation of the abbreviations in the figures

SDS: Sodium-Dodecyl-Sulfate
SOS: Sodium_Olefine-Sulfonate
YEp351: Yeast Episomal plasmid number 351

**Table 1**

| Test for inactivation and elimination of microorganisms from seeds by the method according to the invention. | | | |
|---|---|---|---|
| | H₂O | Composition for seed treatment (F1) | Composition for seed treatment (F2) |
| microorganisms | | | |
| *Escherichia coli (DSM 498)* | 2.5x10⁵ | 0 | 0 |
| *Pseudomonas syringae (DSM 10604)* | 2.8x10⁵ | 0 | 0 |
| *Xanthomonas campestris (DSM 3586)* | 2.2x10⁵ | 0 | 0 |

**Table 2**

| Test for inactivation and elimination of bacteriophages from seeds by the method according to the invention. | | | |
|---|---|---|---|
| | H₂O | Composition for seed treatment (F3) | Composition for seed treatment (F4) |
| bacteriophage lamda-gt11 | 8.5x10⁴ | 0 | 0 |

## Claims

1. Method for enhancing seed germination and seed development, wherein at least one seed is treated with a composition comprising a synergistic mixture of
a) at least one vitamin in concentrations from 1 mM to 50 mM,
b) at least one metal ion in concentrations of 0.1 mM to 10 mM, and
c) at least on surface-active substance in concentrations of 0.005 % to 1 % (wv).

2. Method according to claim 1, **characterized in that** the vitamin is selected from the group of water-soluble vitamins having the characteristics of an antioxidant.

3. Method according to claim 1 or 2, wherein the vitamin is ascorbic acid.

4. Method according to claim 1, 2 or 3, **characterized in that** the metal ion is taken from the 4th group and sub-groups I, II, or VIII of the periodic table of the elements.

5. Method according to claim 4, **characterized in that** the metal ion is a salt from the respective acid or base.

6. Method according to any one of the claims 1 to 5, **characterized in that** the surface-active substance is selected from the group consisting of anionic, non-ionic, amphoteric or cationic tensides, and suitable mixtures thereof.

7. Method according to any one of the claims 1 to 6, **characterized in that** the vitamin according to a) is used in concentrations from 2 mM to 40 mM.

8. Method according to any one of the claims 1 to 7, **characterized in that** the metal ion according to b) is used in concentrations of 0.5 mM to 5 mM.

9. Method according to any one of the claims 1 to 8, **characterized in that** the surface-active substance according to c) is used in concentrations of 0.01 % to 0.5 % (weight) in relation to the total volume of the solution.

10. Method according to any one of the claims 1 to 9, wherein the treatment is accomplished by liquid application, bath treatment, coating or dusting of the at least one seed.

11. Method according to any one of the claims 1 to 10, wherein organic acids are used as a buffer for adjusting an acidic pH before the treatment is accomplished.

12. Method according to any one of the claims 1 to 11, wherein the pH of the composition is adjusted before the treatment to a value within the range of pH 2 and pH 5.

13. Method according to any one of the claims 1 to 12, wherein, for production and shipment, said composition is provided as a 100xfold to 10,000xfold concentrate.

14. Seed comprising at its surface a coating comprising a synergistic mixture of
a) at least one vitamin,
b) at least one metal ion, and
c) at least on surface-active substance.

15. Use of a composition comprising a synergistic mixture of
a) at least one vitamin,
b) at least one metal ion, and
c) at least on surface-active substance
for removal or elimination of nucleic acids, viruses, bacteria, fungi and other microorganisms from at least one seed.
